# EUROPEAN PATENT APPLICATION

(11) **EP 0 676 258 A1**
(43) Date of publication of application: **11.10.1995**
(21) Application number: 95500047.6
(22) Date of filing: 07.04.1995
(51) Int. Cl.: B23K 37/04

(54) **A process and devices for welding, flaring and inserting elbows in batteries**

(30) Priority: 07.04.1994 ES 9400745
(71) Applicant: KOBOL S.A., E-31350 Peralta (Navarra) (ES)
(72) Inventor: Montseny Banajes, Albert, E-08253 San Salvador De Guardiola (ES)
(74) Representative: Carpintero Lopez, Francisco

(57) **Abstract**

The process is based upon the measurement of a number of points (9) on the battery (10) in order to find the true and precise position in which such battery is lying. These values are compared with reference values obtained in a computer, and are visible on a screen (3), all data relating to every battery being provided, thereby allowing path shifts to be calculated to be able to correctly position the battery in the appropriate location for welding, flaring and elbow insertion. The measurement is made by a special gauge (5) whereas the operations are carried out by a robot (1) whose arm (12) is fitted with a grip to and from which specific tools (6), (7) and (8) can be coupled for flaring, insertion and welding to take place, as appropriate. The robot (1) arm (12) is fitted with a resilient wrist member that allows minor shifts of the grip as such to be offset.

## Description

### OBJECT OF THE INVENTION

As explained in this specification, the present invention relates to a process for automatically welding, flaring and inserting elbows in batteries by means of the use of a traditional robot fitted with specifically developed devices in order to offset usual errors in the manufacture and positioning of batteries to be assembled, and the inaccuracies in the robot arm movements, thereby allowing absolute precision in operations involving welding, flaring and elbow insertion in batteries.

### BACKGROUND OF THE INVENTION

The incorporation of robots in manufacturing processes usually poses positioning problems due to the fact that the robot used carries out the expected operations automatically and repetitively, thereby always reaching specific positions or working points, doing so with a precision (typical thereof) of about tenths or hundredths of a millimetre. Constructive inaccuracies in the battery also arise from the manufacturing process, and there are also inaccuracies in conveying the parts and finally laying the same on the worktable of the robot, for this generally takes place by mechanic or pneumatic means that entail an inaccuracy of some millimetres in the final position of the battery working points that are logically in conflict with the robot requirements.

This problem of major tolerances, or so we shall refer to it, can be overcome using highly sophisticated and hence very expensive means for conveying and positioning parts, or else by developing an artificial viewing system connected to the robot, enabling the same to be aware of the precise position of the battery, and being particularly designed for the process and materials to be manipulated, but this is not deemed to be very appropriate in the process for making batteries, for there is a wide range of battery sizes rendering the development of a unique viewing system adapting to all battery sizes and capable of providing the required precision in the described positioning difficult.

In addition to the problems aforesaid, specifically when it is matter of flaring and inserting elbows before welding the same to the battery tubes, a second problem lies in the minor tolerances, essentially stemming from the loss of precision in the approaching movements of the robot arm, which is due to its own mechanical tolerances, and is unacceptable in this specific case for it would prevent a correct flaring and elbow insertion operation.

There are however currently electronic wrist members for robots that achieve a great precision and which are used frequently in the automatic insertion of microelectronic chips, but being extremely expensive their use in the application described is not advisable.

In relation to these problems applied to the flaring and insertion operations aforesaid, a number of attempts have been made, though always unsuccessfully, possibly due to the fact that the problem has been sought to be solved by endeavouring to adapt the whole productive process to the precision characteristics inherent in the robot, which goal is very difficult to achieve simply and cheaply, this operation being currently made with human assistance, every elbow being manually inserted one by one and then adjusted using a hammer.

The subject process however does not attempt to position the parts with the precision required by the robot, but successfully solves the problems described more simply, proposing the use of conventional means to position the parts and leaving the robot to assess the true deviations there may be relative to the theoretical set positions, adapting thereto.

### DESCRIPTION OF THE INVENTION

The process and devices subject hereof have been devised to fully solve the problems aforesaid, and in particular the problems of major tolerances, as they are designated, and the problems of minor tolerances.

First of all, a simple process has been developed to allow the shifts of the battery that is being worked upon when it is conveyed and lifted up to the working station of the robot, which is generally done by mechanical or pneumatic means that entail certain position inaccuracies inherent therein, to be known. This process lies in the robot using a specially designed gauge to read certain battery points enabling the same to find the true and precise position in which the battery has been placed, comparing these values with the reference values obtained from a computer that has all the data relating to each battery, thereby to calculate the variations in the set paths the robot must follow.

The method thus described is particularly suited for full automatic welding using a robot to ensure a standard quality of the welding that cannot be achieved with any other method and, very much in particular with the mass production of products having a large variety of shapes and sizes. The present process however seeks, as aforesaid, to full automatically carry out all welding, flaring and elbow insertion operations to which end the minor deviations there are when the robot grip is positioned and preventing the insertion of elbows or flaring which demand a great precision, have to be successfully offset. To this end a resilient wrist member has been designed to be coupled to the robot arm, which enables a certain movement in any direction and/or rotation between the fixing member and the grip support, always within the margin allowed by the inner resilient elements joining both members, thereby successfully suitably positioning both the flaring tool and the elbow insertion tool upon the battery tube.

It therefore seems clear that with the subject process and using the means described both flaring and elbow insertion and then welding thereof can be made full automatically, for the robot need only change tools for the various operations, thereby greatly enhancing productivity in large manufacturing series, albeit at the same time allowing short series manufacture of a large variety of batteries with minimum waiting times and with the resulting enhanced productivity.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

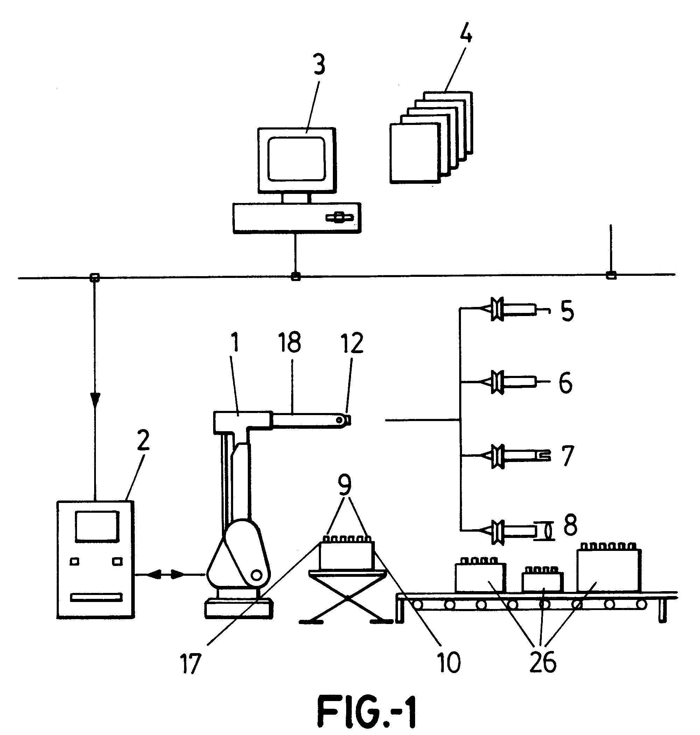

Figure 1.- Is a schematic view of the subject automatic system and the interconnection of the various devices that make it up.
Figure 2.- Shows two side views of a feeler for gauging batteries with previously mounted elbows that are to be subsequently welded.
Figure 3.- Shows two side views of a feeler for gauging batteries where no elbows have been mounted, in order to proceed to insert the same or with flaring.
Figure 4.- Shows two side views with a cut-away section of the specifically designed wrist member, showing the flexible elements fitted.
Figure 5.- Is a schematic view of an elbow insertion sequence, showing the error offsetting effect of the subject wrist member.

### PREFERRED EMBODIMENT OF THE INVENTION

With reference to the figures, it is clear that the subject process relies upon the use of a robot (1) fitted with a local control system (2) plugged into a CAD-CAM computer system (3) housing contour maps (4) of the various battery models to be produced that are sent to the robot control system (2) in order for the said robot (1) to know at all times the type of part (10) to be worked on, and the features and dimensions thereof. This robot (1), configured as above, is automatically capable of the flaring, elbow insertion and welding operations upon batteries, to which end it is fitted with a number of specific tools (6), (7) and (8) that are respectively interchangeable with each other, depending upon the operation to be made. In order to allow the functions described to be carried out automatically with the requisite precision, the robot has a gauging tool (5) used by the robot before carrying out any of the subsequent functions and which touches various points (9) on each battery (10), previously defined on the maps (4) for each different kind of battery (10), that allow the robot to know the true positions of the said reference points (9) that the control (2) will then compare with the technical data stored in memory, correcting, depending upon the outcome of such comparison, the paths to be followed by the robot arm (12) in the subsequent flaring, insertion or welding operations.

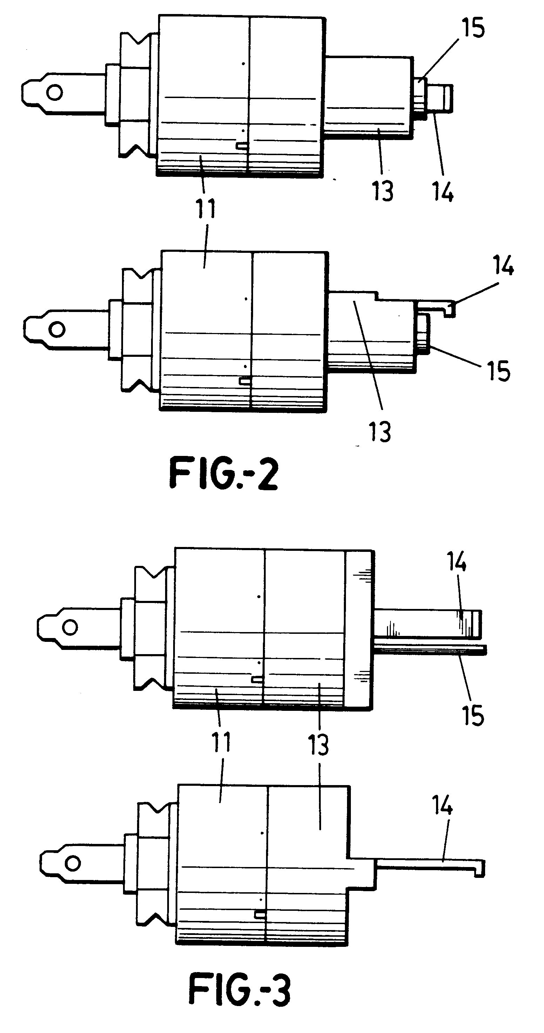

As shown in figures 2 and 3, in order to proceed with gauging, the gauging tool (5) comprises a shell (11) that is coupled to the robot arm (12) and a head (13) or gauge body as such, to which a contact plate (14) and a contact bush (15) are coupled by mechanical means, where tubes are gauged, or a contact rod (16), where tubes with ready-fitted elbows are gauged. With this tool, the robot will use the contact plate (14) to touch the periphery of the reference points (9) to find the x and position coordinates, and the rod (16) or bush (15) to find the height z relative to the working plane (17), using these data according to the process described above, to proceed with the next operations to be conducted on the battery.

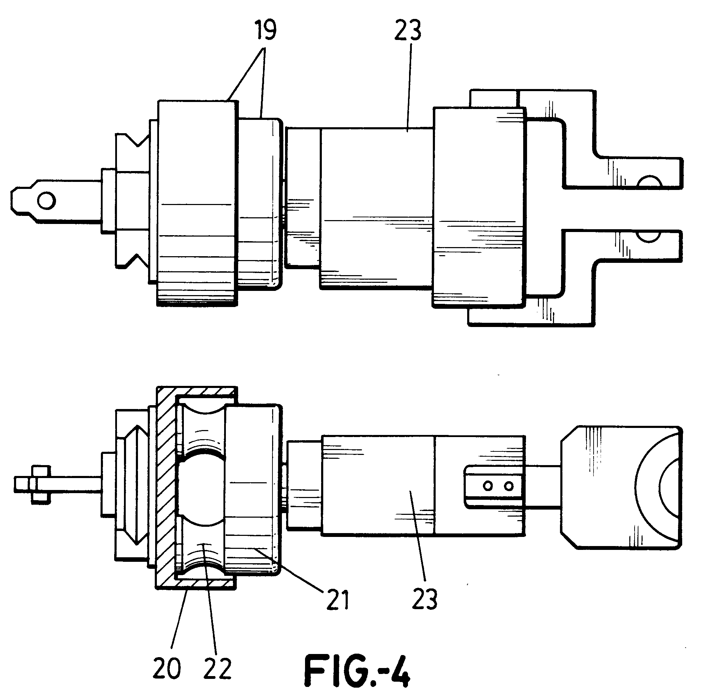

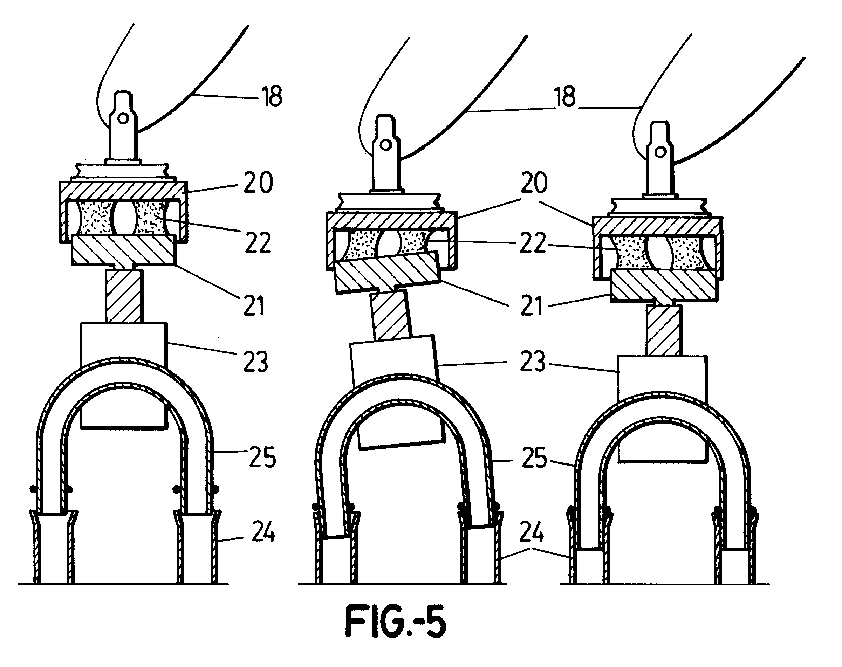

Finally, and to avoid the errors arising out of the minor tolerances aforesaid, for the final positioning of the robot arm (18), a wrist member (19) has been designed for the various tools or working grips (5), (6), (7), (8), as shown in figure 4, comprising a grip fixing member (20) and a grip support (21), resiliently attached to one another by means of 4 resilient elements (22) that allow the grip support (21) and the grip (23) some movement altogether, relative to the fixing member (20), thereby allowing the minor robot positioning defects to be offset, for the resilient elements (22) are deformed independently and depending upon the stressing of the grip in moving, that is in elbow insertion due to the fixed position of the tube (24) that force the elbow (25) to be inserted into its mouth, elastically deforming the members (22) relative to the grip fixing member (20) that follows the set theoretical paths. Figure 5 shows the operation described as a sequence of movements and the relative positions of the various parts of the robot wrist member.

This same process is used for flaring and similar results are obtained.

We feel that the description need not be extended any longer for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

**1.-** A process and devices for welding, flaring and inserting elbows in batteries, applied to a traditional robot, essentially characterised by using specifically developed gauging tools coupled to the robot arm through a highly tolerant flexible wrist member for dimensional battery control, establishing contact with such battery at pre-established points, acquiring the values of its three spatial co-ordinates, and automatically proceeding to compare the same with data previously stored in a CAD-CAM computer system, and transmitted from the computer to the robot in order, from such comparison, to obtain the correction values for the previously stored working positions, allowing the robot to reprogram its movement paths, adjusting the same to the true battery positions.

**2.-** A process and devices for welding, flaring and inserting elbows in batteries, as in claim 1, essentially characterised in that in flaring and elbow insertion, the robot, fitted with a resilient wrist member, moves up to the theoretic pre-established working positions and then moves the tool downwards, which tool is forced to move sideways along the profile of the battery tube until it reaches its mouth and lies in the right position, causing the necessary deformations in the resilient wrist member for the path thus defined to be followed.

**3.-**A process and devices for welding, flaring and inserting elbows in batteries, as in the above claims, essentially characterised in that the robot arm has a special wrist member having resilient joining means that are deformable in every direction to allow relative movements between the part and the robot arm, their size being equivalent to the shifts between the position reached by the robot arm and the true position required for the working part.

**4.-** A process and devices for welding, flaring and inserting elbows in batteries, as in the above claims, essentially characterised in that the gauging tools are fitted with an L-shaped contact plate that moves around the battery tube and is capable of acquiring the longitudinal approach and side displacement co-ordinates, a second contact rod being provided that is applied to the tube or surface to be measured and obtains its elevation relative to the reference plane of the robot.
